# EUROPEAN PATENT SPECIFICATION

(11) **EP 2 475 201 B1**
(45) Date of publication and mention of the grant of the patent: **01.10.2014**
(21) Application number: 10811165.9
(22) Date of filing: 24.05.2010
(51) Int. Cl.: H04B 7/06, H04W 4/02, H04W 72/04, H01Q 1/24, H04W 12/06, H04W 64/00, H04W 88/06, H04W 88/08

(54) **Method and system for guiding smart antenna**
Verfahren und System zur Lenkung intelligenter Antennen
Procédé et système de guidage d'antennes intelligentes

(30) Priority: 31.08.2009 CN 200910172069
(43) Date of publication of application: 11.07.2012
(73) Proprietor: ZTE Corporation, Shenzhen, Guangdong 518057 (CN)
(72) Inventor: ZHAO, Zhenli, Shenzhen City Guangdong 518057 (CN); LIU, Jiejie, Shenzhen City Guangdong 518057 (CN)
(74) Representative: Davies, Gregory Mark
(86) International application number: PCT/CN2010/073140
(87) International publication number: WO 2011/023005

(56) References cited:
- WO-A1-2007/051033
- CN-A- 1 486 028
- CN-A- 1 780 460
- US-A1- 2002 111 174
- US-A1- 2005 014 533

## Description

### Technical Field

The present invention relates to the mobile communication system, and particularly, to a method and system for guiding a smart antenna. The features of the preamble of the independent claims are known WO2007/051033A1. Relevant technologies are also known from US2002/111174A1.

### Background of the Related Art

To solve the security holes existing in the WEP security mechanism as defined in the wireless local area network (WLAN) international standards ISO/IEC8802-11, our country has issued a wireless local area network national standards, which adopts the WLAN Authentication and Privacy Infrastructure (WAPI) security mechanism to solve the security problems of WLAN.

The WAPI security mechanism mainly comprises two parts of the WLAN Authentication Infrastructure (WAI) and the WLAN Privacy Infrastructure (WPI), wherein the WAI provides functions such as security policy negotiation, user identity authentication, key negotiation and access control, and so on. The WAPI certificate authentication protocol adopts the public key cryptography to complete peer two-way authentications of an Authentication Supplicant Entity (ASUE) and an Authenticator Entity (AE) through an Authentication Service Entity (ASE), which guarantees that legal users access legal networks, and meanwhile provides a shared Base Key (BK) for the key management protocol, thereby realizing the negotiation and distribution of keys available for the data communication session.

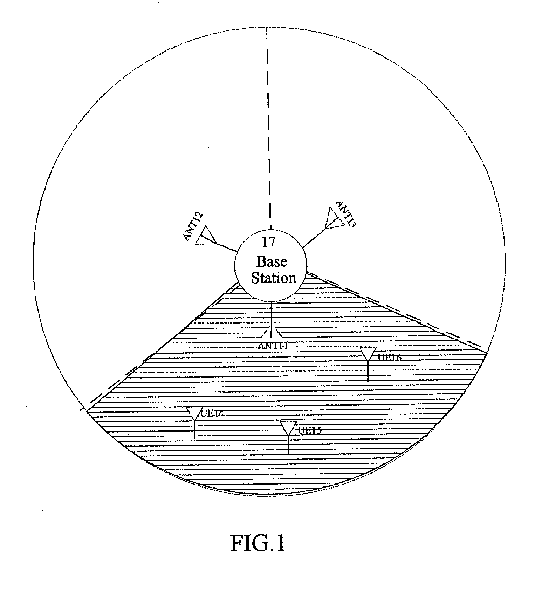

In the mobile communication system, the transceivers equipped by many base stations are usually connected to the antenna devices which provide a coverage area or "cell". The common form of the antenna device comprises three antennas, and each antenna radiates energy in the angle of 120 degree to provide an all-around coverage range which the cell needs. As shown in FIG. 1, it is a schematic diagram of one cell in current conventional cellular communication system. The cell comprises a base station 17, and three antennas 11/12/13 which are connected to the base station and correspond to three sectors respectively, and further has corresponding mobile terminals (UE). The three antennas thereof are usually used to provide a coverage area of 360 degree which each cell needs, for example, the antenna ANT11 in FIG. 1 is responsible for providing signal coverage of 120 degree of the shadow area, and the users, UE14/15/16, only perform connection communication with this antenna. The disadvantage of this system is that the capacity is relatively limited, and the system performance cannot be improved according to the actual user amount and positions.

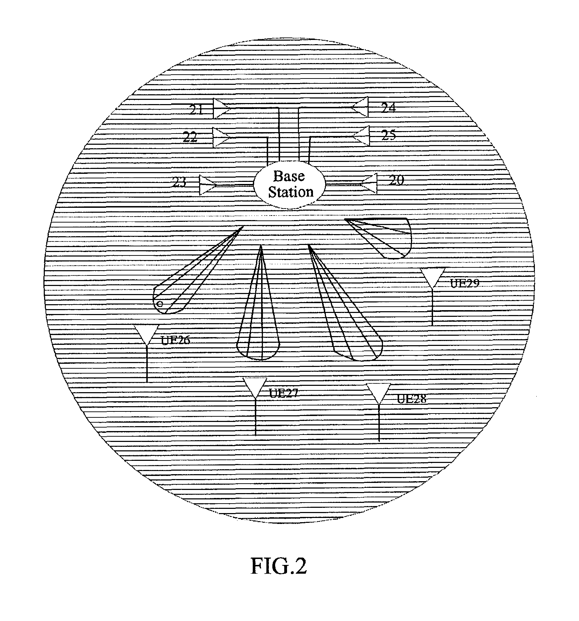

In order to improve the system performance and capacity, now a new-style communication system starts to use a smart antenna array. The smart antenna is an array of antenna elements, and each antenna element receives the signal which needs to be sent with a predetermined phase shift. The net effect of the array is in that the transmitting beam or receiving beam is guided to a predetermined direction, and the direction of the beams can be changed by controlling to excite the phase relation of the signals of the antenna array elements. Therefore, compared with the radiation energy of all the users in the predetermined coverage area by each conventional antenna, the smart antenna guides the beams into each individual user or multiple users. The smart antenna reduces the beam width and then reduces the interference to improve the system capacity. With the reduction of interference, the results of increasing the signal to interference ratio and signal to noise ratio can obtain the improved performance and capacity. In a power control system, as the performance requirement does not change basically, the transmitting power can be effectively reduced. As shown in FIG. 2, the smart antenna is an array of antenna elements 20-25, and the net effect of the array is to guide the transmitting beam or receiving beam to a predetermined direction (which is beneficial for the direction in which the UE is located). Each beam can be controlled by controlling the phase relation of the signals of the elements which are used for stimulating the array. Therefore, compared with the radiation energy of all the users in the predetermined coverage area by each conventional antenna, the smart antenna can guide the beams into each individual UE, for example, the individual beam corresponds to the UE26-29 respectively in the drawing. The smart antenna can reduce the interference by reducing the beam width, so as to improve the system capacity and performance.

Although the smart antenna can improve the capacity and performance effectively, one problem related to the use of the smart antenna is to position the user who will be guided for the given beam. In a reverse link, the position of the user is calculated, through a triangulation or other applicable techniques, by using an angle of arrival of the energy emitted by users. However, the current technique used to calculate the angle of arrival information is computationally intensive. In addition, the system is applicable for the environment which receives the energy from the user through a straight line. And in the urban environment, as signals are usually reflected or received as a multi-path wave velocity by mansions or other buildings, such condition is usually not true.

Therefore, in this new-style mobile communication system, it still needs an apparatus and method for improving the system capacity. Furthermore, the cellular phone communication system which uses the smart antenna needs a better method or apparatus for determining the position of the user who will be guided in the system.

In the related art, a Chinese patent application, of which the patent application number is 01818901.6, is "a method and apparatus for guiding narrow beam antenna by positioning", this patent mainly adopts a method of receiving the Global Positioning System (GPS) signal to determine the position of the user in the system. The disadvantage of this patent is that: the startup time of the GPS device is longer, and particularly for a cold startup, the time of 40s is at least needed, which limits the effective application of this technique.

### Summary of the Invention

The features of the method and apparatus according to the present invention are defined in the independent claims, and the preferable features according to the present invention are defined in the dependent claims.

The technical problem to be solved by the present invention is to provide a method and system for guiding a smart antenna, the implementation of which is simple, and the present invention can position the users effectively, thereby guiding the smart antenna.

In order to solve the above problem, a method for guiding a smart antenna is provided, which comprises:
a terminal accessing a Wireless Local Area Network Authentication and Privacy Infrastructure (WAPI) access point, and acquiring a position information from said WAPI access point;
the terminal directly sending said position information to a base station, and the base station obtaining a terminal position information according to said position information; or the terminal obtaining a terminal position information according to said position information, and sending the terminal position information to the base station; and
the base station guiding the smart antenna by using said terminal position information.

The above method can further have features as follows: said position information is a WAPI access point position information; and the step of said base station obtaining the terminal position information according to said position information comprises: the base station taking said WAPI access point position information as said terminal position information.

The above method can further have features as follows: said position information is a WAPI access point position information; and said method further comprises: said terminal also acquiring a signal strength information between said terminal and said WAPI access point, and sending said signal strength information and said WAPI access point position information to said base station together; and the step of said base station obtaining the terminal position information according to said position information comprises: said base station determining the terminal position information according to said signal strength information and said WAPI access point position information.

The above method can further have features as follows: said position information is a WAPI access point position information; and the step of said terminal obtaining a terminal position information according to said position information comprises: said terminal also acquiring a signal strength information between said terminal and said WAPI access point, and determining said terminal position information according to said signal strength information and said WAPI access point position information.

The above method can further have features as follows: said position information is a terminal position information; and the step of said terminal acquiring a position information from said WAPI access point comprises: said WAPI access point acquiring a signal strength information between said WAPI access point and said terminal, and determining the terminal position information according to the WAPI access point position information and said signal strength information and then sending to said terminal.

The above method further comprises: said terminal performing a certificate authentication process with said WAPI access point when accessing said WAPI access point, and generating a group of base keys when the authentication succeeds;
wherein, the step of said terminal acquiring one position information from said WAPI access point comprises:
said WAPI access point encrypting said position information by using said base key and then sending to said terminal, and said terminal decrypting by using said base key, and obtaining said position information.

A system for guiding a smart antenna is also provided, which comprises a terminal, a Wireless Local Area Network Authentication and Privacy Infrastructure (WAPI) access point and a base station, wherein:
said terminal is configured to: access the WAPI access point, and acquire a position information from said WAPI access point; directly send said position information to the base station, or obtain a terminal position information according to said position information, and send the terminal position information to the base station;
said WAPI access point is configured to: send said position information to said terminal;
said base station is configured to: obtain a terminal position information according to said position information, and guide the smart antenna by using said terminal position information; or, is configured to directly receive said terminal position information from said terminal, and guide the smart antenna by using said terminal position information.

The above system can further have features as follows: said WAPI access point is configured to: take a WAPI access point position information as said position information to send to the terminal;
said terminal is further configured to: acquire a signal strength information between said terminal and said WAPI access point, and send said signal strength information and said WAPI access point position information to said base station together;
said base station is configured to obtain the terminal position information by the following way: taking said WAPI access point position information as the terminal position information; or, determining the terminal position information according to said signal strength information and said WAPI access point position information.

The above system can further have features as follows: said WAPI access point is configured to: take a WAPI access point position information as said position information to send to the terminal;
said terminal is further configured to: acquire a signal strength information between said terminal and said WAPI access point, and determine said terminal position information according to said signal strength information and said WAPI access point position information.

The above system can further have features as follows: said WAPI access point is configured to: acquire the signal strength information between said WAPI access point and said terminal, determine the terminal position information according to said WAPI access point position information and said signal strength information, and take said terminal position information as said position information to send to said terminal.

The above system can further have features as follows: said terminal is further configured to: perform a certificate authentication process with said WAPI access point when accessing said WAPI access point, and generate a group of base keys when the authentication succeeds; receive from said WAPI access point the position information which is encrypted by using said base key, decrypt by using said base key, and obtain said position information;
said WAPI access point is configured to: perform the certificate authentication process with said terminal, and generate a group of base keys when the authentication succeeds, and encrypt said position information by using said base key and then send to said terminal.

The WAPI function is adopted to position, the implementation is simple and the startup time is very short. In addition, the authentication ability of the WAPI is also an advantage, which can guarantee the security of data and prevent that a normal operation of the system is interfered maliciously by using the wrong location information.

### Brief Description of Drawings

FIG. 1 is a schematic diagram of an existing conventional cellular communication system cell;
FIG. 2 is a schematic diagram of a cell after introducing a smart antenna;
FIG. 3 is a block diagram of a system for guiding a smart antenna according to the present invention;
FIG. 4 is a flow chart of a method for UE guiding a smart antenna according to the present invention;
FIG. 5 is a flow chart of a WAPI certificate authentication process; and
FIG. 6 is a schematic diagram of a base station controlling the direction of smart antenna beam.

### Preferred Embodiments of the Present Invention

Below the preferred embodiments of the present invention will be illustrated in detail in combination with the drawings.

The main idea of the present invention is to position a terminal according to the position information of an Access Point (AP) of the WAPI, thereby guiding the smart antenna.

The coverage range of the existing AP of the WAPI can just reach 100 meters at most. Therefore, a mobile communication terminal with a WAPI function can know that the position of the terminal is within the coverage range of radius of 100 meters of the AP after accessing to a certain AP. This accuracy has already satisfied the requirement for the beam positioning of the smart antenna. As each access point can provide its own position information, the mobile terminal can provide the position information of the AP for a base station after accessing the AP of the WAPI, also that is, provide its own rough position information. In addition, the distance from the mobile communication terminal to the AP can further be determined through the signal strength after accessing the WAPI, so as to further precisely determine the position information of the WAPI terminal.

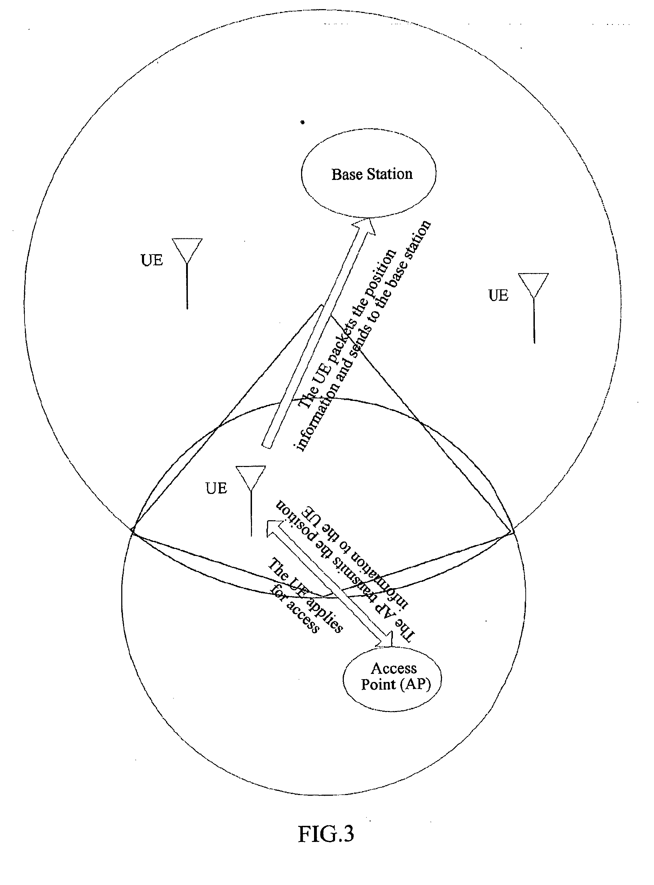

As shown in FIG. 3, a system for guiding the smart antenna in the present invention comprises: a base station with a smart antenna system, and a WAPI AP and a mobile terminal (UE) which supports WAPI functions, wherein:
the mobile terminal (UE) is configured to, after accessing the AP, send out a position information application to the AP through the WAPI function, and packet the received position information of the AP and forward to the base station; can further be configured to acquire a signal strength information between the UE and the AP, and send the signal strength information and the AP position information to the base station together; can further be configured to determine the position information of the terminal according to the signal strength information and the position information of the AP, and send the position information of the terminal to the base station; and can further be configured to directly receive from the AP the terminal position information (namely, the terminal position information determined by the AP side according to the AP position information and the signal strength information) and then send to the base station;
   wherein, the signal strength information is one signal strength level information.

The WAPI access point is configured to receive the position information application of the mobile terminal and response to the position information application, and provide its own position information to this mobile terminal according to a certain format; or is configured to determine the terminal position information according to its own position information and a signal strength information between the WAPI access point and the terminal, and send the terminal position information to the terminal; wherein, the position information is encrypted between the WAPI access point and the terminal by using base keys.

The base station is configured to receive the position information of the AP from the mobile terminal, determine the terminal position information according to the position information of the AP, and guide the smart antenna by using the terminal position information; or directly receive the terminal position information from the terminal, and guide the smart antenna by using the terminal position information.

Wherein, the step of determining the position information of the terminal according to the position information of the AP specifically comprises, taking the position information of the AP as the position information of the terminal directly, or receiving the position information of the AP and the signal strength information from the mobile terminal, and determining the position information of the terminal by using the position information of the AP and the signal strength information; and guiding the smart antenna by using the position information of the terminal;
in addition, the base station also has a mechanical device which is used to response and receive the position information to guide the beam. This mechanical device comprises an antenna array and a smart antenna system of a beam generation network which is used for stimulating this array to output the guided beam.

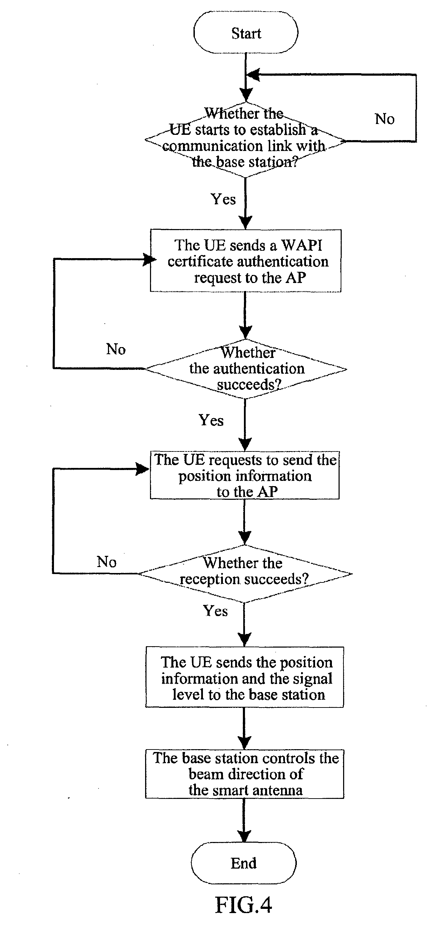

Below the entire process of the mobile communication terminal guiding the latest smart antenna beam in the communication system through the WAPI function will be analyzed with reference to FIG. 4. When the UE needs to establish a communication link (such as the calling or the called), the smart antenna beam in the system needs to direct to this UE, and thus the position information of the UE is needed; and in the present invention, the terminal actively reports its own position information.

A method for guiding the smart antenna provided in the present invention comprises the steps:
firstly, the UE accesses the AP and acquires the position information of the AP from the AP;
when the UE accesses the AP, a certificate authentication process is performed between the UE and the AP; the UE sends a WAPI certificate authentication request to the AP (or a router), and only when the AP authenticates successfully, the UE can be permitted to perform further network accessing (a specific authentication process is described vide post). After the authentication succeeds, the UE and AP will generate a group of consistent Base Keys (BK).

After the authentication succeeds, the UE sends a request message to the AP and requests the AP to send the position information of AP to the UE, and the AP, after receiving the request message, encrypts its own position information by using the base key and then transmits to the UE; or, the AP obtains the terminal position information according to its own position information and the signal strength information between the AP and the terminal, encrypts the terminal position information by using the base key and then transmits to the UE.

The UE receives the position information of the AP and decrypts according to the determined base key, and then acquires the position information of the AP; or the UE receives the terminal position information and decrypts according to the determined base key, and acquires the terminal position information.

Furthermore, the UE can extract its own WAPI signal strength, and determine its own signal strength level at the time according to a predetermined signal strength level (such as the three levels of strong, medium and weak, or other levels). The signal strength level indicates the distance from the UE to the AP, and the stronger the signal strength is, the closer the distance between the UE and the AP is, whereas the farther the distance is.

Then, the UE packs and encrypts the position information of the AP according to a certain format, and sends the packet to the base station; or, the base station packs and encrypts the received position information of the AP and the signal strength level information according to a certain format, and sends the packet to the base station; or, the terminal determines its own position information according to the position information of the AP and the signal strength level information, packs and encrypts its own position information according to a certain format, and sends the packet to the base station; or, the terminal packs and encrypts the terminal position information received from the AP according to a certain format, and sends the packet to the base station;
finally, the base station receives the position information of the AP from the mobile terminal, determines the terminal position information according to the position information of the AP, and guide the smart antenna by using the terminal position information; or, directly receives the terminal position information from the terminal, and guide the smart antenna by using the terminal position information.

Wherein, the determining the terminal position information according to the position information of the AP specifically comprises, directly taking the position information of the AP as the terminal position information, or receiving the position information of the AP and the signal strength information from the mobile terminal, and determining the terminal location information by using the position information of the AP and the signal strength information.

The method for guiding the smart antenna specifically comprises: a base station receiver transmitting the received information to a spatial processor, the spatial processor controlling a beam generator to generate a beam control signal, and the smart antenna adjusting the direction of the beam according to the beam control signal and being guided to the position in which the UE is located.

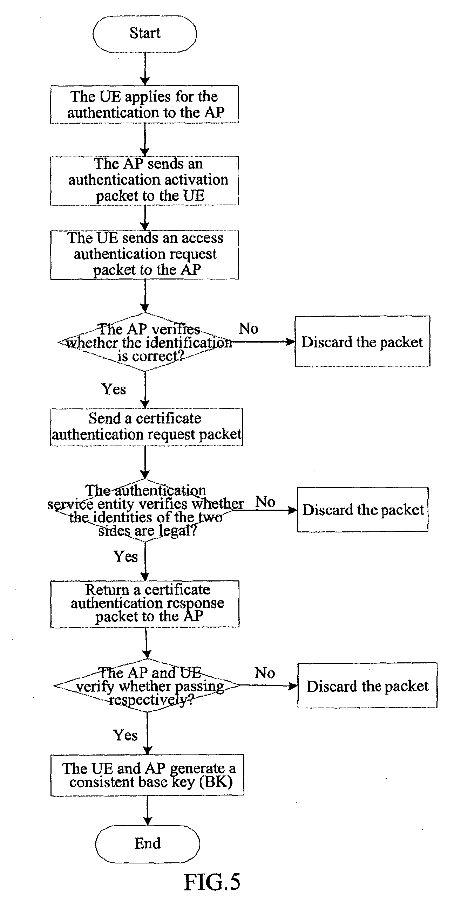

FIG. 5 is a WAPI authentication process in the present invention, which specifically comprises:
(1) when the UE associates or re-associates with the AP, the AP sends an authentication activation packet to the UE, and the authentication activation packet includes an authentication identification;
(2) the UE will send an access authentication request packet to the AP after receiving the authentication activation packet, and the packet includes an authentication identification, a temporary public key and certificate of the UE, and a signature which is made by the UE for the foregoing fields by using a long-term private key;
(3) the AP will perform a verification after receiving the request, and if the identification is correct, the AP sends a certificate authentication request packet to an authentication service entity, otherwise, discards this packet, wherein the certificate authentication request packet includes the authentication identification and the public keys and signatures of the two sides;
(4) afterwards, the authentication service entity will verify whether the identities of the two sides are legal, and if the identities of the two sides are legal, the authentication service entity returns an certificate authentication response packet to the AP, otherwise, discards this packet;
(5) the AP verifies whether the response packet is correct after receiving the response packet, and if the response packet is correct, the AP informs the UE to keep on the verification, otherwise, discards this packet, and if the UE also passes the verification in the following, the two sides will obtain the temporary public key of the opposite side;
(6) the UE and the AP perform a calculation according to a temporary public key of the opposite side and a local temporary private key, and generate the consistent Base Key (BK); and the entire authentication process ends.

The duration time of the above entire authentication and verification process is about Is.

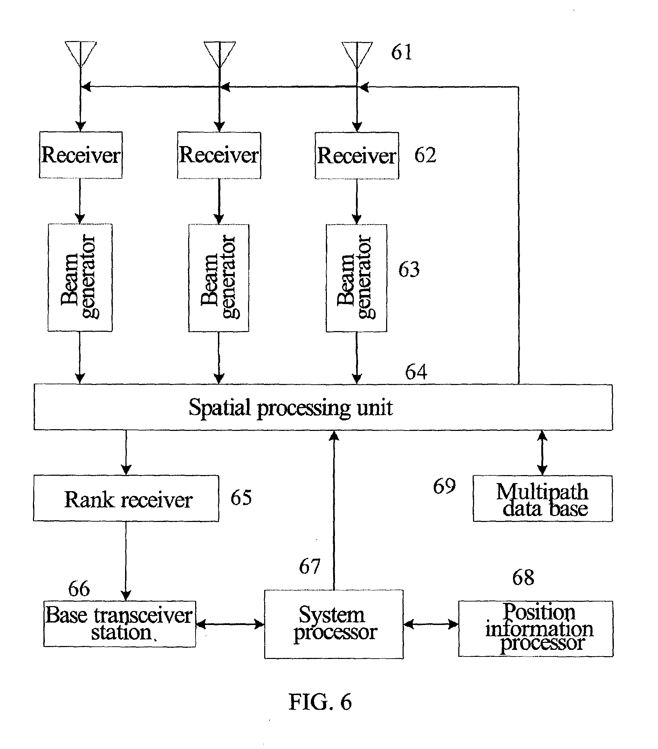

FIG. 6 shows a schematic diagram of the control process of the smart antenna system in combination with the principle of the present invention. The smart antenna system comprises a smart antenna array and a smart antenna processing circuit, wherein, the smart antenna array consists of antenna radiation elements 61, and the smart antenna processing circuit consists of a plurality of receivers 62, a plurality of beam generators 63, a spatial processing unit 64 and a rank receiver 65. As shown in FIG. 6, the n antenna elements 61 of the antenna array are respectively connected to n corresponding receivers 62, and each receiver performs a down-conversion and demodulation to the signals received by the antenna and performs a matched filtering correspondingly, that is, transforms the received radio-frequency signals to an original baseband signals.

Then, the baseband signals output by the receiver are transmitted to the beam generator 63; the beam generation process includes multiplication and addition operation, each beam needs this operation, and generally each user has a plurality of beams existing in a plurality of users. The signals after the addition are provided to the rank receiver 65; and the rank receiver receives the output of the beam generator, and then relays and combines these signals with an optimal form, wherein this operation occurs under the control of the spatial processing unit 64. The spatial processing unit is responsible for determining the features of the beam which is to be formed, that is, determining the gain and phase of the antenna array. The system processor 67 processes the data transmitted from the position information processor 68, and then forwards to the spatial processing unit 64, which is used for uninterruptedly adjusting the features of the beam. Optionally, the information provided by the multipath data base 69 is adopted to calculate the direction of the beam, and the data base either can be based on the analysis for the environment or can be based on the implemented measurement.

If the user does not report the position in which it is located successfully due to various reasons, the system can compatibly adopt an algorithm of producing the pattern covering the entire sector.

It should be understood that, for those ordinary skilled in the art to which the present invention technique belongs, the corresponding equivalent changes or substitutions can be made according to the technical scheme and conception of the present invention, and all these changes or substitutions should all fall into the protection scope of the appending claims of the present invention.

### Industrial Applicability

The present invention adopts the WAPI function to position, the implementation is simple and the startup time is very short. In addition, the authentication ability of the WAPI is also an advantage of the present invention, which can guarantee the security of data and prevent that a normal operation of the system is interfered maliciously by using the wrong location information.

## Claims

1. A method for guiding a smart antenna, **characterized by** comprising:
a terminal with a Wireless Local Area Network Authentication and Privacy Infrastructure (WAPI) function accessing a WAPI access point, and acquiring a position information from said WAPI access point;
the terminal directly sending said position information to a base station, and the base station obtaining a terminal position information according to said position information;
or the terminal obtaining a terminal position information according to said position information, and sending the terminal position information to the base station; and
the base station guiding the smart antenna by using said terminal position information;
wherein the position information is a WAPI access point position information or a terminal position information which is determined according to the WAPI access point position information and a signal strength information between said WAPI access point and said terminal.

2. The method according to claim 1, wherein,
when said position information is the WAPI access point position information,
the step of said base station obtaining the terminal position information according to said position information comprises: the base station taking said WAPI access point position information as said terminal position information.

3. The method according to claim 1, wherein,
when said position information is the WAPI access point position information,
said method further comprises: said terminal acquiring a signal strength information between said terminal and said WAPI access point, and sending said signal strength information and said WAPI access point position information to said base station together;
the step of said base station obtaining the terminal position information according to said position information comprises: said base station determining the terminal position information according to said signal strength information and said WAPI access point position information.

4. The method according to claim 1, wherein,
when said position information is the WAPI access point position information,
the step of said terminal obtaining the terminal position information according to said position information comprises: said terminal acquiring a signal strength information between said terminal and said WAPI access point, and determining said terminal position information according to said signal strength information and said WAPI access point position information.

5. The method according to claim 1, wherein,
when said position information is the terminal position information;
the step of said terminal acquiring the position information from said WAPI access point comprises: said WAPI access point acquiring the signal strength information, and determining the terminal position information and then sending the terminal position information to said terminal.

6. The method according to any one of claims 1 to 5, further comprising: said terminal performing a certificate authentication process with said WAPI access point when accessing said WAPI access point, and generating a group of base keys when the authentication succeeds;
wherein, the step of said terminal acquiring one position information from said WAPI access point comprises:
said WAPI access point encrypting said position information by using said base key and
then sending to said terminal, and said terminal decrypting by using said base key, and obtaining said position information.

7. A system for guiding a smart antenna, **characterized by** comprising a terminal with a Wireless Local Area Network Authentication and Privacy Infrastructure (WAPI) function, a WAPI access point and a base station, wherein:
said terminal is configured to: access the WAPI access point, and acquire a position information from said WAPI access point; directly send said position information to the base station, or obtain a terminal position information according to said position information, and send the terminal position information to the base station;
said WAPI access point is configured to: send said position information to said terminal;
said base station is configured to: obtain a terminal position information according to said position information, and guide the smart antenna by using said terminal position information; or, is configured to directly receive said terminal position information from said terminal, and guide the smart antenna by using said terminal position information;
wherein the position information is a WAPI access point position information or a terminal position information which is determined according to the WAPI access point position information and a signal strength information between said WAPI access point and said terminal.

8. The system according to claim 7, wherein,
said WAPI access point is configured to: take the WAPI access point position information as said position information to send to the terminal;
said terminal is further configured to: acquire the signal strength information, and send said signal strength information and said WAPI access point position information to said base station together;
said base station is configured to obtain the terminal position information by the following way: taking said WAPI access point position information as the terminal position information; or, determining the terminal position information according to said signal strength information and said WAPI access point position information.

9. The system according to claim 7, wherein,
said WAPI access point is configured to: take the WAPI access point position information as said position information to send to the terminal;
said terminal is further configured to: acquire the signal strength information, and determine said terminal position information.

10. The system according to claim 7, wherein,
said WAPI access point is configured to: acquire the signal strength information, determine the terminal position information, and take said terminal position information as said position information to send to said terminal.

11. The system according to any one of claims 7-10, wherein,
said terminal is further configured to: perform a certificate authentication process with said WAPI access point when accessing said WAPI access point, and generate a group of base keys when the authentication succeeds; receive from said WAPI access point said position information which is encrypted by using said base key, decrypt by using said base key, and obtain said position information;
said WAPI access point is configured to: perform the certificate authentication process with said terminal, and generate a group of base keys when the authentication succeeds, and encrypt said position information by using said base key and then send to said terminal.

## Patentansprüche

1. Verfahren zum Leiten einer Smart Antenna, **gekennzeichnet dadurch, dass** das Verfahren aufweist:
Zugreifen auf einen WAPI-Zugriffspunkt durch ein Endgerät mit einer Wireless Local Area Network Authentication and Privacy Infrastructure (WAPI)-Funktion, und Beschaffen einer Positionsinformation von diesem WAPI-Zugriffspunkt;
Direktes Senden der Positionsinformation durch das Endgerät an eine Basisstation und Ermitteln einer Endgerät-Positionsinformation entsprechend der Positionsinformation durch die Basisstation, oder
Ermitteln einer Endgerät-Positionsinformation entsprechend der Positionsinformation durch das Endgerät und Senden der Endgerät-Positionsinformation an die Basisstation; und
Leiten der Smart Antenna durch die Basisstation unter Verwendung der Endgerät-Positionsinformation; wobei
die Positionsinformation eine WAPI-Zugriffspunkt-Positionsinformation ist oder eine Endgerät-Positionsinformation, welche entsprechend der WAPI-Zugriffspunkt-Positionsinformation und einer Signalstärkeninformation zwischen dem WAPI-Zugriffspunkt und dem Endgerät bestimmt wird.

2. Verfahren nach Anspruch 1, wobei
in dem Falle, dass die Positionsinformation die WAPI-Zugriffspunkt-Positionsinformation ist, der Schritt des Ermittelns der Endgerät-Positionsinformation entsprechend der Positionsinformation durch die Basisstation umfasst:
Übernehmen der WAPI-Zugriffspunkt-Positionsinformation als Endgerät-Positionsinformation durch die Basisstation.

3. Verfahren nach Anspruch 1, wobei
in dem Falle, dass die Positionsinformation die WAPI-Zugriffspunkt-Positionsinformation ist, das Verfahren weiterhin umfasst:
Beschaffen einer Signalstärkeinformation zwischen dem Endgerät und dem WAPI-Zugriffspunkt durch das Endgerät, und Senden der Signalstärkeinformation und der WAPI-Zugriffspunkt-Positionsinformation gemeinsam an die Basisstation;
der Schritt des Ermittelns der Endgerät-Positionsinformation entsprechend der Positionsinformation durch die Basisstation umfasst:
Bestimmen der Endgerät-Positionsinformation entsprechend der Signalstärkeinformation und der WAPI-Zugriffspunkt-Positionsinformation durch die Basisstation.

4. Verfahren nach Anspruch 1, wobei
in dem Falle dass die Positionsinformation die Endgerät-Positionsinformation ist, der Schritt des Ermittelns der Endgerät-Positionsinformation entsprechend der Positionsinformation durch das Endgerät weiterhin umfasst:
Beschaffen einer Signalstärkeinformation zwischen dem Endgerät und dem WAPI-Zugriffspunkt durch das Endgerät, und Bestimmen der Endgerät-Positionsinformation entsprechend der Signalstärkeinformation und der WAPI-Zugriffspunkt-Positionsinformation.

5. Verfahren nach Anspruch 1, wobei
in dem Fall, dass die Positionsinformation die Endgerät-Positionsinformation ist, der Schritt des Beschaffens der Positionsinformation von dem WAPI-Zugriffspunkt durch das Endgerät umfasst:
Beschaffen der Signalstärkeinformation durch den WAPI-Zugriffspunkt, und
Bestimmen der Endgerät-Positionsinformation, und anschließendes Senden der Endgerät-Positionsinformation an das Endgerät.

6. Verfahren nach einem der Ansprüche 1 - 5, weiterhin umfassend:
Durchführen eines Zertifikatsauthentifizierungsprozesses mit dem WAPI-Zugriffspunkt durch das Endgerät beim Zugreifen auf den WAPI-Zugriffspunkt, und
Erzeugen einer Gruppe von Basis-Schlüsseln, wenn die Authentifizierung erfolgreich ist;
wobei der Schritt des Beschaffens einer Positionsinformation von dem WAPI-Zugriffspunkt durch das Endgerät umfasst:
Verschlüsselung der Positionsinformation durch den WAPI-Zugriffspunkt durch Verwenden der Basisschlüssel und anschließendes Senden an das Endgerät, und
Entschlüsseln durch das Endgerät durch Verwenden des Basisschlüssels, und Ermitteln der Positionsinformation.

7. System zum Leiten einer Smart Antenna, **gekennzeichnet dadurch, dass** das System aufweist:
ein Endgerät mit einer Wireless Local Area Network Authentication and Privacy Infrastructure (WAPI)-Funktion, einen WAPI-Zugriffspunkt und eine Basisstation, wobei:
das Endgerät ausgebildet ist, um:
auf den WAPI-Zugriffspunkt zuzugreifen, und eine Positionsinformation von diesem WAPI-Zugriffspunkt zu erhalten;
die Positionsinformation direkt an die Basisstation zu senden oder eine Endgerät-Positionsinformation entsprechend der Positionsinformation zu ermitteln und die Endgerät-Positionsinformation an die Basisstation zu senden;
der WAPI-Zugriffspunkt ausgebildet ist, um:
die Positionsinformation an das Endgerät zu senden;
die Basisstation ausgebildet ist, um:
eine Endgerät-Positionsinformation entsprechend der Positionsinformation zu ermitteln, und
die Smart Antenna durch Verwenden der Endgerät-Positionsinformation zu leiten; oder ausgebildet ist, um
die Endgerät-Positionsinformation direkt von dem Endgerät zu empfangen, und
die Smart Antenna durch Verwenden der Endgerät-Positionsinformation zu leiten; wobei
die Positionsinformation eine WAPI-Zugriffspunkt-Positionsinformation ist oder eine Endgerät-Positionsinformation, welche entsprechend der WAPI-Zugriffspunkt-Positionsinformation und einer Signalstärkeninformation zwischen dem WAPI-Zugriffspunkt und dem Endgerät bestimmt wird.

8. System nach Anspruch 7, wobei:
der WAPI-Zugriffspunkt ausgebildet ist, um:
die WAPI-Zugriffspunkt-Positionsinformation als Positionsinformation zum Senden an das Endgerät zu übernehmen;
das Endgerät weiterhin ausgebildet ist, um:
die Signalstärkeinformation zu beschaffen und die Signalstärkeinformation und die WAPI-Zugriffspunktinformation gemeinsam an die Basisstation zu senden;
die Basisstation ausgebildet ist, um die Endgeräts-Positionsinformation auf folgendem Wege zu ermitteln:
Übernehmen der WAPI-Zugriffspunkt-Positionsinformation als die Endgerät-Positionsinformation; oder Bestimmen der Endgerät-Positionsinformation entsprechend der Signalstärkeinformation und der WAPI-Zugriffspunkt-Positionsinformation.

9. System nach Anspruch 7, wobei
der WAPI-Zugriffspunkt ausgebildet ist, um:
die WAPI-Zugriffspunkt-Positionsinformation als die Positionsinformation zum Senden an das Endgerät zu übernehmen;
das Endgerät weiter ausgebildet ist, um:
die Signalstärkeinformation zu beschaffen, und die Endgerät-Positionsinformation zu bestimmen.

10. System nach Anspruch 7, wobei
der WAPI-Zugriffspunkt ausgebildet ist, um:
die Signalstärkeinformation zu beschaffen, die Endgerät-Positionsinformation zu bestimmen, und die Endgerät-Positionsinformation als Positionsinformation zum Senden an das Endgerät zu übernehmen.

11. System nach einem der Ansprüche 7 - 10 wobei
das Endgerät weiter ausgebildet ist um:
beim Zugreifen auf den WAPI-Zugriffspunkt einen Zertifikatsauthentifizierungsprozesses mit dem WAPI-Zugriffspunkt durchzuführen, und eine Gruppe von Basis-Schlüsseln zu erzeugen, wenn die Authentifizierung erfolgreich ist;
von dem WAPI-Zugriffspunkt die Positionsinformation, welche durch Verwenden des Basisschlüssels verschlüsselt wurde, zu erhalten, durch Verwenden des Basisschlüssels zu entschlüsseln; und die Positionsinformationen zu ermitteln;
der WAPI-Zugriffspunkt ausgebildet ist, um:
den Zertifikatsauthentifizierungsprozess mit dem Endgerät durchzuführen, und eine Gruppe von Basisschlüsseln zu erzeugen, wenn die Authentifizierung erfolgreich ist, und die Positionsinformationen durch Verwenden des Basisschlüssels zu verschlüsseln und an das Endgerät zu senden.

## Revendications

1. Procédé pour guider une antenne intelligente, **caractérisé en ce qu'**il comprend :
l'accès d'un terminal avec une fonction d'infrastructure d'authentification et de confidentialité de réseau local sans fil (WAPI) à un point d'accès WAPI et son acquisition d'une information de position à partir dudit point d'accès WAPI ;
l'envoi direct par le terminal de ladite information de position à une station de base et l'obtention par la station de base d'une information de position de terminal en fonction de ladite information de position ; ou l'obtention par le terminal d'une information de position de terminal en fonction de ladite information de position et son envoi de l'information de position de terminal à la station de base ; et
le guidage de l'antenne intelligente par la station de base en utilisant ladite information de position de terminal ;
dans lequel l'information de position est une information de position de point d'accès WAPI ou une information de position de terminal qui est déterminée en fonction de l'information de position de point d'accès WAPI et d'une information d'intensité de signal entre ledit point d'accès WAPI et ledit terminal.

2. Procédé selon la revendication 1, dans lequel,
quand ladite information de position est l'information de position de point d'accès WAPI,
l'étape d'obtention par ladite station de base de l'information de position de terminal en fonction de ladite information de position comprend : le fait que la station de base prenne ladite information de position de point d'accès WAPI comme ladite information de position de terminal.

3. Procédé selon la revendication 1, dans lequel,
quand ladite information de position est l'information de position de point d'accès WAPI,
ledit procédé comprend en outre : l'acquisition par ledit terminal d'une information d'intensité de signal entre ledit terminal et ledit point d'accès WAPI et son envoi de ladite information d'intensité de signal et de ladite information de position de point d'accès WAPI conjointement à ladite station de base ;
l'étape d'obtention par ladite station de base de l'information de position de terminal en fonction de ladite information de position comprend : la détermination par ladite station de base de l'information de position de terminal en fonction de ladite information d'intensité de signal et de ladite information de position de point d'accès WAPI.

4. Procédé selon la revendication 1, dans lequel,
quand ladite information de position est l'information de position de point d'accès WAPI,
l'étape d'obtention par ledit terminal de l'information de position de terminal en fonction de ladite information de position comprend : l'acquisition par ledit terminal d'une information d'intensité de signal entre ledit terminal et ledit point d'accès WAPI et sa détermination de ladite information de position de terminal en fonction de ladite information d'intensité de signal et de ladite information de position de point d'accès WAPI.

5. Procédé selon la revendication 1, dans lequel,
quand ladite information de position est l'information de position de terminal ;
l'étape d'acquisition par ledit terminal de l'information de position à partir dudit point d'accès WAPI comprend : l'acquisition par ledit point d'accès WAPI de l'information d'intensité de signal et sa détermination de l'information de position de terminal et ensuite son envoi de l'information de position de terminal audit terminal.

6. Procédé selon l'une quelconque des revendications 1 à 5, comprenant en outre : l'exécution par ledit terminal d'un processus d'authentification de certificat avec ledit point d'accès WAPI lors de l'accès audit point d'accès WAPI et la génération d'un groupe de clés de base quand l'authentification réussit ;
dans lequel l'étape d'acquisition par ledit terminal d'une information de position à partir dudit point d'accès WAPI comprend :
le chiffrement par ledit point d'accès WAPI de ladite information de position en utilisant ladite clé de base et ensuite son envoi audit terminal, et le déchiffrement par ledit terminal en utilisant ladite clé de base et son obtention de ladite information de position.

7. Système pour guider une antenne intelligente, **caractérisé en ce qu'**il comprend un terminal avec une fonction d'infrastructure d'authentification et de confidentialité de réseau local sans fil (WAPI), un point d'accès WAPI et une station de base, dans lequel :
ledit terminal est configuré pour : accéder au point d'accès WAPI et acquérir une information de position à partir dudit point d'accès WAPI ; envoyer directement ladite information de position à la station de base ou obtenir une information de position de terminal en fonction de ladite information de position et envoyer l'information de position de terminal à la station de base ;
ledit point d'accès WAPI est configuré pour : envoyer ladite information de position audit terminal ;
ladite station de base est configurée pour : obtenir une information de position de terminal en fonction de ladite information de position et guider l'antenne intelligente en utilisant ladite information de position de terminal ; ou est configurée pour recevoir directement ladite information de position de terminal à partir dudit terminal et guider l'antenne intelligente en utilisant ladite information de position de terminal ;
dans lequel l'information de position est une information de position de point d'accès WAPI ou une information de position de terminal qui est déterminée en fonction de l'information de position de point d'accès WAPI et d'une information d'intensité de signal entre ledit point d'accès WAPI et ledit terminal.

8. Système selon la revendication 7, dans lequel
ledit point d'accès WAPI est configuré pour : prendre l'information de position de point d'accès WAPI comme ladite information de position à envoyer au terminal ;
ledit terminal est configuré en outre pour : acquérir l'information d'intensité de signal et envoyer ladite information d'intensité de signal et ladite information de position de point d'accès WAPI conjointement à ladite station de base ;
ladite station de base est configurée pour obtenir l'information de position de terminal de la manière suivante : en prenant ladite information de position de point d'accès WAPI comme l'information de position de terminal ; ou en déterminant l'information de position de terminal en fonction de ladite information d'intensité de signal et de ladite information de position de point d'accès WAPI.

9. Système selon la revendication 7, dans lequel
ledit point d'accès WAPI est configuré pour : prendre l'information de position de point d'accès WAPI comme ladite information de position à envoyer au terminal ;
ledit terminal est configuré en outre pour : acquérir l'information d'intensité de signal et déterminer ladite information de position de terminal.

10. Système selon la revendication 7, dans lequel
ledit point d'accès WAPI est configuré pour : acquérir l'information d'intensité de signal, déterminer l'information de position de terminal et prendre ladite information de position de terminal comme ladite information de position à envoyer audit terminal.

11. Système selon l'une quelconque des revendications 7 à 10, dans lequel
ledit terminal est configuré en outre pour : exécuter un processus d'authentification de certificat avec ledit point d'accès WAPI lors de l'accès audit point d'accès WAPI et générer un groupe de clés de base quand l'authentification réussit ; recevoir à partir dudit point d'accès WAPI ladite information de position qui est chiffrée en utilisant ladite clé de base, déchiffrer en utilisant ladite clé de base et obtenir ladite information de position ;
ledit point d'accès WAPI est configuré pour : exécuter le processus d'authentification de certificat avec ledit terminal et générer un groupe de clés de base quand l'authentification réussit et chiffrer ladite information de position en utilisant ladite clé de base et envoyer ensuite audit terminal.
